# EUROPÄISCHE PATENTSCHRIFT

(11) **EP 2 509 736 B1**
(45) Veröffentlichungstag und Bekanntmachung des Hinweises auf die Patenterteilung: **27.03.2019**
(21) Anmeldenummer: 10790756.0
(22) Anmeldetag: 08.12.2010
(51) Int. Cl.: B23H 1/00, B23H 5/00, B23K 26/00, B23K 26/36, B23H 5/04, B23H 7/38, B23H 11/00

(54) **VERFAHREN UND VORRICHTUNG ZUM BEARBEITEN EINES WERKSTÜCKS**
METHOD AND DEVICE FOR MACHINING A WORKPIECE
PROCÉDÉ ET DISPOSITIF POUR L'USINAGE D'UNE PIÈCE

(30) Priorität: 08.12.2009 DE 102009057410
(43) Veröffentlichungstag der Anmeldung: 17.10.2012
(73) Patentinhaber: Continental Automotive GmbH, 30165 Hannover (DE)
(72) Erfinder: GARN, Rüdiger, 09577 Niederwiesa OT Braunsdorf (DE); LENK, Andreas, 01728 Bannewitz OT Possendorf (DE)
(86) Internationale Anmeldenummer: PCT/EP2010/069224
(87) Internationale Veröffentlichungsnummer: WO 2011/070090

(56) Entgegenhaltungen:
- DE-A1-102004 041 780
- US-A1- 2009 166 335

## Beschreibung

Die Erfindung betrifft ein Verfahren und eine entsprechende Vorrichtung zum Bearbeiten eines Werkstücks, bei dem Material des Werkstücks in einem Bearbeitungsbereich mittels eines berührungsfreien Abtrageverfahrens abgetragen wird. Ein entsprechendes Verfahren und eine entsprechende Vorrichtung sind aus US2009166335 bekannt.

Als Beispiel für ein berührungsfreies Abtrageverfahren sei die Elektroerosion genannt. Diese beruht auf einem Materialabtrag zwischen elektrisch leitenden Kontakten. Ein elektrisch leitender Kontakt ist durch ein Werkstück gebildet. Ein weiterer Kontakt ist durch ein formgebendes Werkzeug gebildet, z.B. durch einen Draht. Das Werkzeug wird nahe an das Werkstück herangeführt, ohne dieses zu berühren. Durch Anlegen einer elektrischen Spannung zwischen dem Werkzeug und dem Werkstück wird kurzzeitig ein Lichtbogen oder ein Funken erzeugt, mittels dem Material aus dem Werkstück gelöst und abgetragen werden kann. Ist das Werkzeug ein dünner Draht, der in axialer Richtung hin zu dem Werkstück nachgeführt wird, dann können in dem Werkstück Bohrungen eingebracht werden, die beispielsweise einen Durchmesser von weniger als einem Millimeter aufweisen, z.B. von 0,2 Millimetern. Solche Bohrungen sind beispielsweise Drosselbohrungen in Einspritzventilen von Brennkraftmaschinen. Das Ausbilden solcher Bohrungen kann sehr zeitaufwändig sein.

Die Aufgabe der Erfindung ist, ein Verfahren und eine entsprechende Vorrichtung zum Bearbeiten eines Werkstücks zu schaffen, das bzw. die einfach und zuverlässig ist.

Die Aufgabe wird gelöst durch die Merkmale der unabhängigen Patentansprüche. Vorteilhafte Weiterbildungen der Erfindung sind in den Unteransprüchen gekennzeichnet.

Die Erfindung zeichnet sich aus durch ein Verfahren und eine entsprechende Vorrichtung zum Bearbeiten eines Werkstücks. Material des Werkstücks wird in einem Bearbeitungsbereich mittels eines berührungsfreien Abtrageverfahrens abgetragen. Das Werkstück wird mit einer Anregungsschwingung mit einer Eigenresonanzfrequenz des Werkstücks oder ein Verbund aus dem Werkstück und einem fest mit dem Werkstück gekoppelten Kopplungselement wird mit einer Anregungsschwingung mit einer gemeinsamen Eigenresonanzfrequenz des Werkstücks und des Kopplungselements angeregt. Die Eigenresonanzfrequenz ist so gewählt, dass in dem Bearbeitungsbereich eine Schwingung mit einer bezogen auf eine Anregungsamplitude der Anregungsschwingung maximalen Schwingungsamplitude auftritt.

Die Erfindung beruht auf der Erkenntnis, dass das Bearbeiten des Werkstücks beschleunigt ablaufen kann, wenn dem Werkstück zusätzlich zu der Energie, die unmittelbar zum Bearbeiten zugeführt wird, Energie in Form von Schwingungen zugeführt wird. Die Schwingungen können das Abtragen des Materials von dem Werkstück unterstützen und somit beschleunigen. Die Anregung des Werkstücks oder des Werkstücks und des Kopplungselements mit einer Eigenresonanzfrequenz ermöglicht maximale Schwingungsamplituden des Bearbeitungsbereichs bei minimalem Energieeinsatz. Damit kann eine hohe Energieeffizienz erreicht werden. Die Bearbeitungszeit des berührungsfreien Abtrageverfahrens kann sehr gering sein. Das Werkstück kann so auch bei einer Massenfertigung in hoher Qualität hergestellt werden. Durch die geringe Bearbeitungszeit kann eine Taktzeit für das Bearbeiten des Werkstücks verringert werden.

In einer vorteilhaften Ausgestaltung des Verfahrens ist das Werkstück direkt oder über das Kopplungselement fest mit einem Aktuator gekoppelt. Der Aktuator regt das Werkstück oder den Verbund aus dem Werkstück und dem fest mit dem Werkstück gekoppelten Kopplungselement mit einer Schwingungsfrequenz an, die gleich der Eigenresonanzfrequenz des Werkstücks oder der Eigenresonanzfrequenz des Werkstücks und des Kopplungselements ist. Der Vorteil ist, dass der Abgleich der Eigenresonanzfrequenzen des Werkstücks, des Aktuators und gegebenenfalls des Kopplungselements einen verschleißfreien Kontakt zwischen Werkstück, Aktuator und gegebenenfalls Kopplungselement ermöglicht.

In einer weiteren vorteilhaften Ausgestaltung des Verfahrens ist die maximale Schwingungsamplitude der Schwingung in dem Bearbeitungsbereich gleich einer maximalen Schwingungsamplitude der Schwingung des Aktuators. Dies hat den Vorteil, dass ein Verschleiß des Aktuators, des Werkzeugs und gegebenenfalls des Kopplungselements vermieden werden kann.

In einer weiteren vorteilhaften Ausgestaltung des Verfahrens liegt an einer Kontaktstelle zwischen dem Aktuator und dem Werkstück oder zwischen dem Aktuator und dem Verbund aus dem Werkstück und dem fest mit dem Werkstück gekoppelten Kopplungselement die maximale Schwingungsamplitude der Schwingung des Aktuators vor. Dies hat den Vorteil, dass ein Verschleiß des Aktuators, des Werkzeugs und gegebenenfalls des Kopplungselements vermieden werden kann.

In einer weiteren vorteilhaften Ausgestaltung des Verfahrens ist die Eigenresonanzfrequenz des Werkstücks so gewählt, dass die Richtung der Schwingung in dem Bearbeitungsbereich vorzugsweise in einer Bearbeitungsrichtung des formgebenden Werkzeugs liegt. Damit kann das berührungsfreie Abtrageverfahren besonders effizient durchgeführt werden.

Das berührungsfreie Abtrageverfahren ist eine Elektroerosion mit einer vorgegebenen Pulsfrequenz. Der Vorteil ist, dass die Elektroerosion ein sicheres und genaues berührungsfreies Abtrageverfahren ist.

Die Pulsfrequenz des berührungsfreien Abtrageverfahrens und die Anregungsfrequenz des Aktuators sind miteinander synchronisiert. Dies hat den Vorteil, dass eine Synchronisierung der Bewegung des Werkstücks mit dem Abtragevorgang und damit eine besonders sichere und präzise Bearbeitung des Bearbeitungsbereichs möglich ist.

In einer vorteilhaften Ausgestaltung weist die Vorrichtung einen Aktuator auf, der ausgebildet ist zur festen Kopplung mit dem Werkstück direkt oder über das Kopplungselement.

In einer weiteren vorteilhaften Ausgestaltung der Vorrichtung ist der Aktuator ein Piezoaktuator. Piezoaktuatoren stellen einen besonders zuverlässigen Typ eines Aktuators dar.

In einer weiteren vorteilhaften Ausgestaltung weist die Vorrichtung eine Haltevorrichtung auf, die mit einem Abschnitt des Kopplungselements gekoppelt ist, in dem eine Schwingung mit einer minimalen Schwingungsamplitude auftritt. Damit ist eine gute Einleitung der Haltekraft in das Kopplungselement und damit auch ein sicheres Halten und Ausrichten des Werkstücks möglich.

In einer weiteren vorteilhaften Ausgestaltung der Vorrichtung weist das Kopplungselement eine sich in einer Längsrichtung des Kopplungselements erstreckende Medienzufuhrausnehmung auf, und die Medienzufuhrausnehmung weist einen Medieneintritt auf, der in einem Abschnitt des Kopplungselements angeordnet ist, in dem eine Schwingung mit einer minimalen Schwingungsamplitude auftritt. Dies hat den Vorteil, dass dem Bearbeitungsbereich des Werkstücks über die Ausnehmung in einfacher Weise ein Betriebsmedium, beispielsweise zum Spülen des Bearbeitungsbereichs des Werkstücks, zugeführt werden kann.

Ausführungsbeispiele der Erfindung sind im Folgenden anhand der schematischen Zeichnungen erläutert.

Es zeigen:
- Figur 1: eine erste Ausführungsform einer Vorrichtung zum Bearbeiten eines Werkstücks, und
- Figur 2: eine zweite Ausführungsform der Vorrichtung.

Elemente gleicher Konstruktion oder Funktion sind figuren-übergreifend mit den gleichen Bezugszeichen versehen.

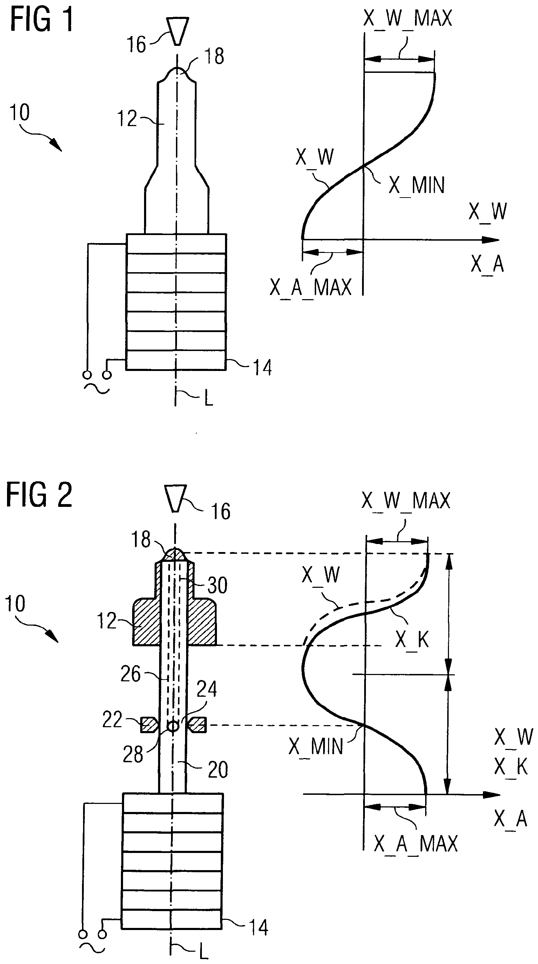

Die Figuren 1 und 2 zeigen jeweils eine Vorrichtung 10 zum Bearbeiten eines Werkstücks 12. Das Werkstück 12 ist beispielsweise ein Teil eines Einspritzventils für eine Brennkraftmaschine eines Kraftfahrzeugs. Die Vorrichtung 10 hat einen Aktuator 14, der so angeordnet und ausgebildet ist, dass dem Werkstück 12 Energie in Form mechanischer Schwingungen durch Anregen des Werkstücks 12 auf direktem Wege (Figur 1) oder indirekt (Figur 2) zugeführt werden kann. Vorzugsweise ist der Aktuator 14 ein Piezoaktuator. Eine Befestigung des Werkstücks 12 und des Aktuators 14 innerhalb einer nicht weiter dargestellten Maschine erfolgt vorzugsweise über Elemente, die als Feder-Masse-Systeme ausgelegt sind. Damit kann eine Übertragung von mechanischen Schwingungen auf weitere Komponenten der Maschine vermieden werden.

Die Vorrichtung 10 umfasst ferner ein formgebendes Werkzeug 16, das an einen Bearbeitungsbereich 18 des Werkstücks 12 herangeführt werden kann. Das formgebende Werkzeug 16 wird vorzugsweise so geführt, dass es das Werkstück 12, insbesondere den Bearbeitungsbereich 18, nicht berührt. Mittels des formgebenden Werkzeugs 16 kann Material des Werkstücks 12 in dem Bearbeitungsbereich 18 mittels eines berührungsfreien Abtrageverfahrens abgetragen werden.

Das formgebende Werkzeug 16 kann in einer Ausführungsform bevorzugt eine Elektrode sein. Zwischen dem als Elektrode ausgebildeten formgebenden Werkzeug 16 und dem Werkstück 12 kann eine elektrische Spannung angelegt werden, die so groß ist, dass vorzugsweise kurzzeitig ein Lichtbogen oder ein Funken zwischen dem als Elektrode ausgebildeten formgebenden Werkzeug 16 und dem Werkstück 12 entstehen kann. Durch den Lichtbogen oder den Funken, das heißt durch die in das Werkstück 12 eingebrachte elektrische Energie, kann Material aus dem Werkstück 12 in dem Bearbeitungsbereich 18 herausgelöst und abgetragen werden. Ein derartiges Abtrageverfahren wird als Elektroerosion bezeichnet.

In einer weiteren Ausführungsform kann das formgebende Werkzeug 16 als Laser ausgebildet sein. Insbesondere kann der Bearbeitungsbereich 18 des Werkstücks 12 mittels einer gepulsten Laserstrahlung des als Laser ausgebildeten formgebenden Werkzeugs 16 bearbeitet werden, sodass durch das Einbringen der Energie des gepulsten Lasers Ionen aus dem Bearbeitungsbereich 18 des Werkstücks 12 gelöst werden und das Material des Werkstücks in dem Bereich 18 des Werkstücks 12 verdampfen kann. Ein derartiges mit einem als Laser ausgebildeten formgebenden Werkzeug 16 durchgeführtes Abtrageverfahren wird als Laserablation bezeichnet.

In der in Figur 2 gezeigten Ausführungsform weist die Vorrichtung 10 ein Kopplungselement 20 auf, das einerseits fest mit dem Werkstück 12 und andererseits fest mit dem Aktuator 14 gekoppelt ist. Das Kopplungselement 20 ist dazu ausgebildet, die Schwingungen des Aktuators 14 auf das Werkstück 12 zu übertragen. Das Kopplungselement 20 ist beispielsweise ein Aufnahmedorn.

Die Vorrichtung 10 hat ferner eine Haltevorrichtung 22, die mit einem Abschnitt 24 des Kopplungselements 20 gekoppelt ist, so dass das Werkstück 12 gehalten werden kann.

In der in Figur 2 gezeigten Ausführungsform weist das Kopplungselement 20 eine sich in Richtung einer Längsachse L des Kopplungselements 20 erstreckende Medienzufuhrausnehmung 26 auf. Die Medienzufuhrausnehmung 26 hat einen Medieneintritt 28, der in einem Abschnitt des Kopplungselements 20 angeordnet ist. Des Weiteren hat die Medienzufuhrausnehmung 26 einen Medienaustritt 30, der vorzugsweise nahe des Bearbeitungsbereichs 18 des Werkstücks 12 angeordnet ist. Über die Medienzufuhrausnehmung 26 kann ein Arbeitsmedium, beispielsweise Wasser oder Luft, über den Medienaustritt 30 dem Bearbeitungsbereich 18 des Werkstücks 12 zugeführt werden, so dass Partikel, die durch das berührungsfreie Abtrageverfahren von dem Bearbeitungsbereich 18 des Werkstücks 12 gelöst wurden, mit dem Arbeitsmedium weggeschwemmt werden können. So kann der Bearbeitungsbereich 18 des Werkstücks 12 von abgetragenem Material gereinigt werden. Damit kann vermieden werden, dass bereits abgetragenes Material ein weiteres Abtragen von Material von dem Werkstück 12 beeinträchtigt.

Im Folgenden soll das Verfahren zum Bearbeiten des Werkstücks 12 im Detail dargestellt werden.

In der in Figur 1 gezeigten Ausführungsform, bei dem der Aktuator 14 direkt fest mit dem Werkstück 12 gekoppelt ist, regt der Aktuator 14 das Werkstück 12 zu einer Schwingung X_W mit einer Schwingungsfrequenz an, die gleich einer der Eigenresonanzfrequenzen des Werkstücks 12 ist. Die Eigenresonanzfrequenz wird dabei so gewählt, dass in dem Bearbeitungsbereich 18 eine maximale Schwingungsamplitude X_W_MAX des Werkstücks 12 erreicht wird. Die maximale Schwingungsamplitude X_W_MAX ist dabei insbesondere von einer maximalen Schwingungsamplitude X_A_MAX einer Schwingung X_A des Aktuators 12 bestimmt. Die Eigenresonanzfrequenz des Werkstücks 12 wird dabei vorzugsweise so gewählt, dass die Richtung der Schwingung in dem Bearbeitungsbereich 18 vorzugsweise in einer Bearbeitungsrichtung des formgebenden Werkzeugs 16 liegt, was vorteilhaft im Hinblick auf das berührungsfreie Abtrageverfahren ist. Die maximale Schwingungsamplitude X_W_MAX der Schwingung in dem Bearbeitungsbereich 18 ist vorzugsweise gleich der maximalen Schwingungsamplitude X_A_MAX der Schwingung des Aktuators 14. Wird das Werkstück 12 mit einer seiner Eigenresonanzfrequenzen angeregt, so ist es möglich, den Bearbeitungsbereich 18 mit einem minimalen Energieaufwand gezielt in Schwingung zu versetzen. Damit ist es möglich, das Verfahren zum Bearbeiten des Werkstücks 12 mit einer sehr hohen energetischen Effizienz durchzuführen. An der Berührungsstelle zwischen dem Aktuator 14 und dem Werkstück 12 ist nahezu Verschleißfreiheit gegeben, so dass eine industrielle Anwendung der Vorrichtung 10 ermöglicht ist.

In der in Figur 2 gezeigten Ausführungsform wird der Verbund aus dem Werkstück 12 und dem Kopplungselement 20 mit einer gemeinsamen Eigenresonanzfrequenz des Werkstücks 12 und des Kopplungselements 20 angeregt. Die Eigenresonanzfrequenz wird dabei so gewählt, dass in dem Bearbeitungsbereich 18 die Schwingung X_W des Werkstücks 12 die maximale Schwingungsamplitude X_W_MAX hat. Der Aktuator 14 regt das Werkstück 12 und das Kopplungselement 20 mit einer Schwingungsfrequenz an, die gleich einer der gemeinsamen Eigenresonanzfrequenzen des Werkstücks 12 und des Kopplungselements 20 ist. Die maximale Schwingungsamplitude X_W_MAX der Schwingung in dem Bearbeitungsbereich 18 ist gleich der maximalen Schwingungsamplitude X_A_MAX der Schwingung des Aktuators 14.

Je nach gewählter Eigenresonanzfrequenz des Werkstücks 12 und des Kopplungselements 20 treten in dem Kopplungselement 20 ein oder mehrere Schwingungsknoten auf. In den Schwingungsknoten erreicht eine Schwingung X_K des Kopplungselements 20 eine minimale Schwingungsamplitude X_MIN, die gegebenenfalls auch den Wert Null annehmen kann. In der in Figur 2 gezeigten Ausführungsform sind zwei derartige Schwingungsknoten gezeigt. Die Haltevorrichtung 22 ist vorzugsweise in dem Abschnitt 24 des Kopplungselements 20 angeordnet, in dem die minimale Schwingungsamplitude X_MIN erreicht ist. Des Weiteren ist in der hier gezeigten Ausführungsform der Medieneintritt 28 der Medienzufuhrausnehmung 26 in dem Abschnitt 24 des Kopplungselements 20 angeordnet, in dem die minimale Schwingungsamplitude X_MIN auftritt. Treten in dem Kopplungselement 20 insbesondere mehr als zwei Schwingungsknoten auf, so können der Abschnitt des Kopplungselements 20, in dem der Medieneintritt 28 angeordnet ist, und der Abschnitt des Kopplungselements 20, in dem die Haltevorrichtung 22 angeordnet ist, voneinander verschieden sein. Aufgrund der in den Schwingungsknoten auftretenden minimalen Schwingungsamplitude X_MIN kann das Medium zum Spülen des Bearbeitungsbereichs 18 des Werkstücks 20 sehr sicher in den Medieneintritt 28 eingeleitet werden. Des Weiteren kann die Vorrichtung 10 mittels der Haltevorrichtung 22 in den Schwingungsknoten, in denen die minimale Schwingungsamplitude X_MIN erreicht wird, besonders sicher gehalten und geführt werden.

Die Pulsfrequenz des berührungsfreien Abtrageverfahrens und die Anregungsfrequenz des Aktuators 14 sind miteinander synchronisiert. Die Pulsfrequenz des Elektroerosionsverfahrens kann dann der Anregungsfrequenz des Aktuators 14 entsprechen oder ein ganzzahliges Vielfaches davon sein.
Ist das Werkstück 12 insbesondere ein Teil eines Einspritzventils für eine Brennkraftmaschine eines Kraftfahrzeugs, so können durch die Anregung mit einer Eigenresonanzfrequenz des Werkstücks 12 und dem Auftreten einer Schwingung mit einer maximalen Schwingungsamplitude X_W_MAX in dem Bearbeitungsbereich 18 sehr günstige Prozessbedingungen beim Herstellen von Mikrobohrungen für die Einspritzöffnungen des Einspritzventils erreicht werden. Die Bearbeitungsgeschwindigkeit beim Bearbeiten des Werkstücks 12 kann so deutlich erhöht werden.

## Patentansprüche

1. Verfahren zum Bearbeiten eines Werkstücks (12), bei dem
- Material des Werkstücks (12) in einem Bearbeitungsbereich (18) mittels eines berührungsfreien Abtrageverfahrens abgetragen wird, und
- das Werkstück (12) mit einer Anregungsschwingung mit einer Eigenresonanzfrequenz des Werkstücks (12) oder ein Verbund aus dem Werkstück (12) und einem fest mit dem Werkstück (12) gekoppelten Kopplungselement (20) mit einer Anregungsschwingung mit einer gemeinsamen Eigenresonanzfrequenz des Werkstücks (12) und des Kopplungselements (20) angeregt wird,
wobei die Eigenresonanzfrequenz so gewählt ist, dass in dem Bearbeitungsbereich (18) eine Schwingung mit einer bezogen auf eine Anregungsamplitude (X_A) der Anregungsschwingung maximalen Schwingungsamplitude (X_W_MAX) auftritt, **dadurch gekennzeichnet dass** das berührungsfreie Abtrageverfahren eine Elektroerosion mit einer vorgegebenen Pulsfrequenz ist, wobei die Pulsfrequenz des berührungsfreien Abtrageverfahrens und die Anregungsfrequenz des Aktuators (14) miteinander synchronisiert sind.

2. Verfahren nach Anspruch 1, wobei das Werkstück (12) direkt oder über das Kopplungselement (20) fest mit einem Aktuator (14) gekoppelt ist,
bei dem der Aktuator (14) das Werkstück (12) oder den Verbund aus dem Werkstück (12) und dem fest mit dem Werkstück (12) gekoppelten Kopplungselement (20) mit einer Schwingungsfrequenz anregt, die gleich der Eigenresonanzfrequenz des Werkstücks (12) oder der Eigenresonanzfreguenz des Werkstücks (12) und des Kopplungselements (20) ist.

3. Verfahren nach einem der vorstehenden Ansprüche, bei dem die maximale Schwingungsamplitude (X_W_MAX) der Schwingung in dem Bearbeitungsbereich (18) gleich einer maximalen Schwingungsamplitude (X_A_MAX) der Schwingung des Aktuators (14) ist.

4. Verfahren nach einem der Ansprüche 2 und 3, bei dem an einer Kontaktstelle zwischen dem Aktuator (14) und dem Werkstück (12) oder zwischen dem Aktuator (14) und dem Verbund aus dem Werkstück (12) und dem fest mit dem Werkstück (12) gekoppelten Kopplungselement (20) die maximale Schwingungsamplitude (X_A_MAX) der Schwingung des Aktuators (14) vorliegt.

5. Verfahren nach einem der vorstehenden Ansprüche, bei dem die Eigenresonanzfrequenz des Werkstücks (12) so gewählt ist, dass die Richtung der Schwingung in dem Bearbeitungsbereich (18) vorzugsweise in einer Bearbeitungsrichtung des formgebenden Werkzeugs (16) liegt.

6. Vorrichtung (10) zum Bearbeiten eines Werkstücks (12), die ausgebildet ist
- zum Abtragen von Material des Werkstücks (12) in einem Bearbeitungsbereich (18) mittels eines berührungsfreien Abtrageverfahrens, und
- zum Anregen des Werkstücks (12) mit einer Anregungsschwingung mit einer Eigenresonanzfrequenz des Werkstücks (12) oder eines Verbunds aus dem Werkstück (12) und einem fest mit dem Werkstück (12) gekoppelten Kopplungselement (20) mit einer Anregungsschwingung mit einer gemeinsamen Eigenresonanzfrequenz des Werkstücks (12) und des Kopplungselements (20),
wobei die Eigenresonanzfrequenz so gewählt ist, dass in dem Bearbeitungsbereich (18) eine Schwingung mit einer bezogen auf eine Anregungsamplitude (X_A) der Anregungsschwingung maximalen Schwingungsamplitude (X_W_MAX) auftritt, **dadurch gekennzeichnet, dass** die Vorrichtung ausgebildet ist für ein berührungsfreies Abtragen mittels Elektroerosion mit einer vorgegebenen Pulsfrequenz, wobei die Pulsfrequenz des berührungsfreien Abtrageverfahrens und die Anregungsfrequenz des Aktuators (14) miteinander synchronisiert sind.

7. Vorrichtung (10) nach Anspruch 6, die einen Aktuator (14) aufweist, der ausgebildet ist zur festen Kopplung mit dem Werkstück (12) direkt oder über das Kopplungselement (20).

8. Vorrichtung (10) nach Anspruch 7, wobei der Aktuator (14) ein Piezoaktuator ist.

9. Vorrichtung (10) nach einem der Ansprüche 6 bis 8, die eine Haltevorrichtung (22) aufweist, die mit einem Abschnitt (24) des Kopplungselements (20) gekoppelt ist, in dem eine Schwingung mit einer minimalen Schwingungsamplitude (X_MIN) auftritt.

10. Vorrichtung (10) nach einem der Ansprüche 6 bis 9, wobei das Kopplungselement (20) eine sich in einer Längsrichtung des Kopplungselements (20) erstreckende Medienzufuhrausnehmung (26) aufweist, und die Medienzufuhrausnehmung (26) einen Medieneintritt (28) aufweist, der in einem Abschnitt (24) des Kopplungselements (20) angeordnet ist, in dem eine Schwingung mit einer minimalen Schwingungsamplitude (X_MIN) auftritt.

## Claims

1. Method for machining a workpiece (12), in which
- material of the workpiece (12) is removed in a machining region (18) by means of a non-contact removal process, and
- the workpiece (12) is excited by means of an excitation oscillation having a self-resonant frequency of the workpiece (12) or a combination comprising the workpiece (12) and a coupling element (20) that is coupled rigidly to the workpiece (12) is excited by means of an excitation oscillation having a common self-resonant frequency of the workpiece (12) and the coupling element (20),
the self-resonant frequency being selected such that, in the machining region (18), an oscillation occurs that has a maximum oscillation amplitude (X_W_MAX) in relation to an excitation amplitude (X_A) of the excitation oscillation, **characterized in that** the non-contact removal process is electroerosion with a predetermined pulse frequency, wherein the pulse frequency of the non-contact removal process and the excitation frequency of the actuator (14) are synchronized with one another.

2. Method according to Claim 1, the workpiece (12) being coupled rigidly to an actuator (14) directly or via the coupling element (20),
in which the actuator (14) excites the workpiece (12) or the combination comprising the workpiece (12) and the coupling element (20) that is coupled rigidly to the workpiece (12) at an oscillation frequency which is equal to the self-resonant frequency of the workpiece (12) or the self-resonant frequency of the workpiece (12) and the coupling element (20).

3. Method according to one of the preceding claims, in which the maximum oscillation amplitude (X_W_MAX) of the oscillation in the machining region (18) is equal to a maximum oscillation amplitude (X_A_MAX) of the oscillation of the actuator (14).

4. Method according to either of Claims 2 and 3, in which the maximum oscillation amplitude (X_A_MAX) of the oscillation of the actuator (14) is present at a contact point between the actuator (14) and the workpiece (12) or between the actuator (14) and the combination comprising the workpiece (12) and the coupling element (20) that is coupled rigidly to the workpiece (12).

5. Method according to one of the preceding claims, in which the self-resonant frequency of the workpiece (12) is selected in such a way that the direction of the oscillation in the machining region (18) is preferably in a machining direction of the shaping tool (16).

6. Device (10) for machining a workpiece (12), said device being designed
- to remove material of the workpiece (12) in a machining region (18) by means of a non-contact removal process, and
- to excite the workpiece (12) by means of an excitation oscillation with a self-resonant frequency of the workpiece (12) or a combination comprising the workpiece (12) and a coupling element (20) that is coupled rigidly to the workpiece (12) by means of an excitation oscillation having a common self-resonant frequency of the workpiece (12) and the coupling element (20),
the self-resonant frequency being selected such that, in the machining region (18), an oscillation occurs that has a maximum oscillation amplitude (X_A_MAX) in relation to an excitation amplitude (X_A) of the excitation oscillation, **characterized in that** the device is designed for a non-contact removal by means of electroerosion with a predetermined pulse frequency, wherein the pulse frequency of the non-contact removal process and the excitation frequency of actuator (14) are synchronized with one another.

7. Device (10) according to Claim 6, which has an actuator (14) which is designed to rigidly couple the workpiece (12) directly or via the coupling element (20).

8. Device (10) according to Claim 7, the actuator (14) being a piezoelectric actuator.

9. Device (10) according to one of Claims 6 to 8, which has a holding device (22), which is coupled to a section (24) of the coupling element (20) in which an oscillation having a minimum oscillation amplitude (X_MIN) occurs.

10. Device (10) according to one of Claims 6 to 9, the coupling element (20) having a media supply cutout (26) extending in a longitudinal direction of the coupling element (20), and the media supply
cutout (26) has a media inlet (28), which is arranged in a section (24) of the coupling element (20) in which an oscillation having a minimum oscillation amplitude (X_MIN) occurs.

## Revendications

1. Procédé pour l'usinage d'une pièce (12), dans lequel
- du matériau de la pièce (12) est enlevé dans une zone d'usinage (18) au moyen d'un procédé d'enlèvement sans contact et
- la pièce (12) est excitée avec une vibration d'excitation présentant une fréquence de résonance propre de la pièce (12) ou bien un assemblage de la pièce (12) et d'un élément d'accouplement (20) couplé de manière fixe à la pièce (12) est excité avec une vibration d'excitation présentant une fréquence de résonance propre commune de la pièce (12) et de l'élément d'accouplement (20),
dans lequel la fréquence de résonance propre est choisie de telle sorte qu'il se produit une vibration avec une amplitude de vibration maximale (X_W_MAX) par rapport à une amplitude d'excitation (X_A) de la vibration d'excitation dans la zone d'usinage (18), **caractérisé en ce que** le procédé d'enlèvement sans contact est l'électroérosion avec une fréquence d'impulsions prédéterminée, dans lequel la fréquence d'impulsions du procédé d'enlèvement sans contact et la fréquence d'excitation de l'actionneur (14) sont synchronisées entre elles.

2. Procédé selon la revendication 1, dans lequel la pièce (12) est couplée de manière fixe à un actionneur (14) directement ou par l'élément d'accouplement (20),
dans lequel l'actionneur (14) excite la pièce (12) ou l'assemblage de la pièce (12) et de l'élément d'accouplement (20), qui est couplé de manière fixe à la pièce (12), avec une fréquence de vibration égale à la fréquence de résonance propre de la pièce (12) ou à la fréquence de résonance propre de la pièce (12) et de l'élément d'accouplement (20).

3. Procédé selon l'une des revendications précédentes, dans lequel l'amplitude de vibration maximale(X_W_MAX) de la vibration dans la zone d'usinage (18) est égale à une amplitude de vibration maximale (X_A_MAX) de la vibration de l'actionneur (14).

4. Procédé selon l'une des revendications 2 et 3, dans lequel l'amplitude de vibration maximale (X_A_MAX) de la vibration de l'actionneur (14) est présente en un point de contact entre l'actionneur (14) et la pièce (12) ou entre l'actionneur (14) et l'assemblage de la pièce (12) et de l'élément d'accouplement (20) qui est couplé de manière fixe à la pièce (12).

5. Procédé selon l'une des revendications précédentes, dans lequel la fréquence de résonance propre de la pièce (12) est choisie de telle sorte que la direction de la vibration dans la zone d'usinage (18) soit de préférence orientée dans une direction de l'outil (16) qui confère une forme.

6. Dispositif (10) pour l'usinage d'une pièce (12), lequel dispositif est conçu
- pour enlever du matériau de la pièce (12) dans une zone d'usinage (18) au moyen d'un procédé d'enlèvement sans contact, et
- pour exciter la pièce (12) avec une vibration d'excitation présentant une fréquence de résonance propre de la pièce (12) ou d'un assemblage de la pièce (12) et d'un élément d'accouplement (20) couplé de manière fixe à la pièce (12) avec une vibration d'excitation présentant une fréquence de résonance propre commune de la pièce (12) et de l'élément d'accouplement (20),
dans lequel la fréquence de résonance propre est choisie de telle sorte qu'il se produit une vibration avec une amplitude d'oscillation maximale (X_W_MAX) par rapport à une amplitude d'excitation (X_A) de la vibration d'excitation dans la zone d'usinage (18), **caractérisé en ce que** le dispositif est conçu pour un enlèvement sans contact au moyen d'une électroérosion avec une fréquence d'impulsions prédéterminée, dans lequel la fréquence d'impulsions du procédé d'enlèvement sans contact et la fréquence d'excitation de l'actionneur (14) sont synchronisées entre elles.

7. Dispositif (10) selon la revendication 6, comprenant un actionneur (14) qui est conçu pour être couplé de manière fixe à la pièce (12) directement ou par l'intermédiaire de l'élément d'accouplement (20).

8. Dispositif (10) selon la revendication 7, dans lequel l'actionneur (14) est un actionneur piézoélectrique.

9. Dispositif (10) selon l'une des revendications 6 à 8, comprenant un dispositif de maintien (22) couplé à une partie (24) de l'élément d'accouplement (20) dans laquelle il apparaît une vibration avec une amplitude de vibration minimale (X_MIN).

10. Dispositif (10) selon l'une des revendications 6 à 9, dans lequel l'élément d'accouplement (20) présente un évidement (26) d'alimentation en fluide s'étendant dans une direction longitudinale de l'élément d'accouplement (20), et l'évidement d'alimentation en fluide (26) présente une entrée de fluide (28) disposée dans une partie (24) de l'élément d'accouplement (20) dans laquelle il apparaît une vibration avec une amplitude de vibration minimale (X_MIN).
